# EUROPEAN PATENT APPLICATION

(11) **EP 1 983 169 A1**
(43) Date of publication of application: **22.10.2008**
(21) Application number: 08154717.6
(22) Date of filing: 17.04.2008
(51) Int. Cl.: F02B 23/10, F02D 19/08

(54) **Internal Combustion Engine and Combustion Method of the Same**

(30) Priority: 20.04.2007 JP 2007111085
(71) Applicant: Nissan Motor Co., Ltd., Kanagawa 221-0023 (JP)
(72) Inventor: Noda, Toru, Atsugi-shi Kanagawa 243-0123 (JP); Araki, Takashi, Atsugi-shi Kanagawa 243-0123 (JP); Ashida, Koichi, Atsugi-shi Kanagawa 243-0123 (JP)
(74) Representative: Holmes, Matthew William

(57) **Abstract**

An internal combustion engine (10), including a premixed mixture formation device (31) that forms a premixed mixture of fuel and air in a combustion chamber (14), a fuel gas supply device (35) that injects fuel gas (F2) directly into the combustion chamber (14), and an ignition device (38) that ignites the fuel gas. The fuel gas supply device (35) is configured to inject the fuel gas into the premixed mixture near a top dead center of a compression stroke such that a spray of the fuel gas (F2) passes through a firing position of the ignition device, to produce the spray of the fuel gas in a predetermined area substantially extending from one end of a cylinder bore to the other end as viewed in a cylinder-bore direction defined by a centerline of the cylinder bore. The ignition device (38) is configured to directly ignite the spray of the fuel gas (F2) and to ignite and burn the premixed mixture by way of flame propagation along the spray of the fuel gas.

## Description

The present invention relates to an internal combustion engine and combustion method and particularly, but not exclusively, to an internal combustion engine an method for burning a premixed air-fuel mixture formed in a combustion chamber by way of spark-ignition. Aspects of the invention relate to an engine, to a method and to a vehicle.

In conventional spark-ignition engines, it is generally known that a thermal efficiency can be enhanced and air pollutants contained in exhaust gases can be reduced by rarefying, or leaning, out a mixture of fuel and air. However, when combusting a lean mixture by spark-ignition, there is a possibility of unstable combustion. In order to suppress such unstable combustion, and also to enlarge a lean-combustion limit of a lean mixture or a lean misfire limit, there have been proposed and developed various combustion technologies. In recent years, in particular, technologies concerning premixed compressed-ignition combustion, in which a lean premixed air-fuel mixture is self-ignited by compressing the mixture by a reciprocating piston, have progressed remarkably.

A combined technology of premixed compressed-ignition combustion and hydrogenation combustion has been disclosed in related art. A lean premixed mixture (a first mixture) is formed in a combustion chamber of an internal combustion engine by pre-mixing the first fuel with air, and then the first mixture is compressed. Additionally, the second fuel (hydrogen) is supplied into a partial area of the combustion chamber (around a spark plug) to form a stratified air-fuel mixture (a second mixture), and then the second mixture is spark-ignited and burned so as to raise the pressure in the combustion chamber. By virtue of the pressure rise, the lean premixed mixture (the first mixture) is self-ignited by compression.

In the related art internal combustion engine, the premixed mixture, formed by the first fuel, is burned in the form of compressed self-ignition combustion. Fundamentally, such a combustion mode cannot solve the essential task of premixed compressed-ignition combustion, that is, a suppression in combustion noise occurring due to rapid heat generation, and an avoidance of knocking.

It is an aim of the present invention to address this issue and to improve upon known technology. Embodiments of the invention may provide a high-efficiency and low-emission internal combustion engine capable of suppressing rapid and localized heat generation by multipoint-igniting a lean premixed mixture at a plurality of points in a combustion chamber. Other aims and advantages of the invention will become apparent from the following description, claims and drawings.

Aspects of the present invention therefore provide an engine, a method and a vehicle as claimed in the appended claims.

According to another aspect of the invention for which protection is sought, there is provided an internal combustion engine comprising a premixed mixture formation device that forms a premixed mixture of fuel and air in a combustion chamber, a fuel gas supply device that injects fuel gas directly into the combustion chamber and an ignition device that ignites the fuel gas, wherein the fuel gas supply device is configured to inject the fuel gas into the premixed mixture near a top dead center of a compression stroke such that a spray of the fuel gas passes through a firing position of the ignition device, to produce the spray of the fuel gas in a predetermined area substantially extending from one end of a cylinder bore to the other end as viewed in a cylinder-bore direction defined by a centerline of the cylinder bore and wherein the ignition device is configured to directly ignite the spray of the fuel gas and to ignite and burn the premixed mixture by way of flame propagation along the spray of the fuel gas.

In an embodiment, the firing position of the ignition device is located to be offset from a midpoint of a nozzle of the fuel gas supply device and an endpoint of the fuel-spray travel of the fuel gas, toward the nozzle of the fuel gas supply device.

In an embodiment, the ignition device is configured to ignite the spray of the fuel gas, after a tip of the spray of the fuel gas has passed through the firing position of the ignition device and after a middle stage of a fuel-injection time period for the fuel gas injected by the fuel gas supply device.

In an embodiment, the fuel gas supply device includes a gas injection valve located at a side part of the combustion chamber for injecting the fuel gas toward the other side part of the combustion chamber opposite to the side of installation of the gas injection valve.

In an embodiment, the fuel gas supply device includes a gas injection valve located at a center of a top face of the combustion chamber for injecting the fuel gas conically into the combustion chamber.

In an embodiment, the fuel gas supply device includes a gas injection valve located at a center of a top face of the combustion chamber for injecting the fuel gas toward a cavity formed in a crown of a reciprocating piston.

In an embodiment, wherein the fuel gas supply device includes a first gas injection valve and a second gas injection valve, the first and second gas injection valves being located at a center of a top face of the combustion chamber.

In an embodiment, the first gas injection valve injects the fuel gas toward a cavity formed in a crown of a reciprocating piston for forming a concentrated mixture by mixing the premixed mixture with the spray of the fuel gas, and thereafter the second gas injection valve injects the fuel gas radially into the combustion chamber for forming a radial spray.

In an embodiment, the concentrated mixture is ignited and burned by the ignition device, and then the radial spray is ignited by way of a flame, produced by ignition and burning of the concentrated mixture.

In an embodiment, the fuel gas includes a fuel gas having a burning velocity that is greater than a burning velocity of the premixed mixture.

In an embodiment, the fuel gas includes a fuel gas, produced when fuel-reforming a hydrocarbon fuel supplied externally, by way of a reforming reaction.

In an embodiment, the reforming reaction that produces the fuel gas includes a utilization of exhaust heat from the internal combustion engine.

In an embodiment, the reforming reaction that produces the fuel gas includes dehydrogenation.

In an embodiment, the reforming reaction that produces the fuel gas includes partial oxidation.

In an embodiment, the fuel gas includes hydrogen.

In an embodiment, the fuel gas includes a mixture containing an oxidizer.

The engine may comprise a fuel supply control device configured to execute fuel-supply control, for leaning out the premixed mixture and for increasing a fuel-supply ratio of the fuel gas, as an engine load decreases.

In an embodiment, the fuel supplied to the premixed mixture formation device includes a hydrocarbon fuel having a high self-ignitability and a hydrocarbon fuel having a low self-ignitability.

The engine may further include a premixed fuel supply control device configured to execute fuel-supply control, for increasing a fuel-supply ratio of the hydrocarbon fuel having the high self-ignitability and for decreasing a fuel-supply ratio of the hydrocarbon fuel having the low self-ignitability, as an engine load decreases.

In an embodiment, the hydrocarbon fuel having the low self-ignitability includes a fuel gas, produced when fuel-reforming a hydrocarbon fuel supplied externally, by way of a reforming reaction.

In an embodiment, the reforming reaction that produces the hydrocarbon fuel having the low self-ignitability includes a utilization of exhaust heat from the internal combustion engine.

In an embodiment, the reforming reaction that produces the hydrocarbon fuel having the low self-ignitability includes cyclodehydrogenation.

In an embodiment, the hydrocarbon fuel having the high self-ignitability includes a fuel, obtained when separating a hydrocarbon fuel supplied externally, by a separator membrane.

The engine may comprise a compression ratio control device that controls the compression ratio based on engine load.

According to a further aspect of the invention for which protection is sought, there is provided a combustion method of an internal combustion engine, comprising forming a premixed mixture of fuel and air in a combustion chamber, forming a fuel gas layer in a predetermined area of the combustion chamber, substantially extending from one end of a cylinder bore to the other end as viewed in a cylinder-bore direction defined by a centerline of the cylinder bore and including an igniter, near a top dead center on a compression stroke and igniting the fuel gas layer.

According to a still further aspect of the invention for which protection is sought, there is provided an internal combustion engine comprising means for forming a premixed mixture of fuel and air in a combustion chamber, means for injecting fuel gas directly into the combustion chamber and means for igniting the fuel gas, wherein the means for injecting fuel gas is configured to inject the fuel gas into the premixed mixture near a top dead center of a compression stroke such that a spray of the fuel gas passes through a firing position of the means for igniting, to produce the spray of the fuel gas in a predetermined area substantially extending from one end of a cylinder bore to the other end as viewed in a cylinder-bore direction defined by a centerline of the cylinder bore and wherein the means for igniting is configured to directly ignite the spray of the fuel gas and to ignite and burn the premixed mixture by way of flame propagation along the spray of the fuel gas.

For example, in an embodiment the invention may provide an internal combustion engine, including a premixed mixture formation device that forms a premixed mixture of fuel and air in a combustion chamber, a fuel gas supply device that injects fuel gas directly into the combustion chamber, and an ignition device that ignites the fuel gas. The fuel gas supply device is configured to inject the fuel gas into the premixed mixture near a top dead center of a compression stroke such that a spray of the fuel gas passes through a firing position of the ignition device, to produce the spray of the fuel gas in a predetermined area substantially extending from one end of a cylinder bore to the other end as viewed in a cylinder-bore direction defined by a centerline of the cylinder bore. The ignition device is configured to directly ignite the spray of the fuel gas and to ignite and burn the premixed mixture by way of flame propagation along the spray of the fuel gas.

A combustion method of an internal combustion engine according to an embodiment may include forming a premixed mixture of fuel and air in a combustion chamber, forming a fuel gas layer in a predetermined area of the combustion chamber, substantially extending from one end of a cylinder bore to the other end as viewed in a cylinder-bore direction defined by a centerline of the cylinder bore and including an igniter, near a top dead center on a compression stroke, and igniting the fuel gas layer.

According to embodiments of the invention, the flame, produced by combustion of the fuel gas, tends to enlarge along a spray of fuel gas, and thus it is possible to multipoint-ignite a premixed mixture at a plurality of points in a combustion chamber. The spray of the fuel gas tends to produce a strong turbulent flow in the combustion chamber. A mixing action of the flame, produced by combustion of the fuel gas, with the unburned premixed mixture can be promoted, and as a result the lean premixed mixture can be certainly burned.

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings in which:
FIG. 1 is a system diagram showing an engine (an internal combustion engine) of the first embodiment;
FIG. 2 is a diagram showing details of a form of combustion of a lean premixed mixture in a combustion chamber in the case of the first embodiment;
FIG. 3 is a diagram showing switching between combustion modes of the mixture in the combustion chamber in the case of the first embodiment;
FIG. 4 is a system diagram showing an engine (an internal combustion engine) of the second embodiment;
FIG. 5 is a diagram showing details of a form of combustion of a lean premixed mixture in a combustion chamber in the case of the second embodiment;
FIG. 6 is another diagram showing details of a form of combustion of a lean premixed mixture in a combustion chamber in the case of the second embodiment;
FIG. 7A is a characteristic diagram showing the relationship between engine load and excess air factor in a lean combustion operating range in the case of the second embodiment;
FIG. 7B is a characteristic diagram showing the relationship between engine load and fuel supply ratio in a lean combustion operating range in the case of the second embodiment;
FIG. 8 is a flow chart showing a fuel supply control flow of the second embodiment.
FIG. 9 is a system diagram showing an engine (an internal combustion engine) of the third embodiment;
FIG. 10 is a diagram showing details of a form of combustion of a lean premixed mixture in a combustion chamber in the case of the third embodiment;
FIG. 11 is a characteristic diagram used in setting of a compression ratio to be varied relative to engine load in the case of the third embodiment; and
FIG. 12 is a flow chart showing a fuel supply control flow of the third embodiment.

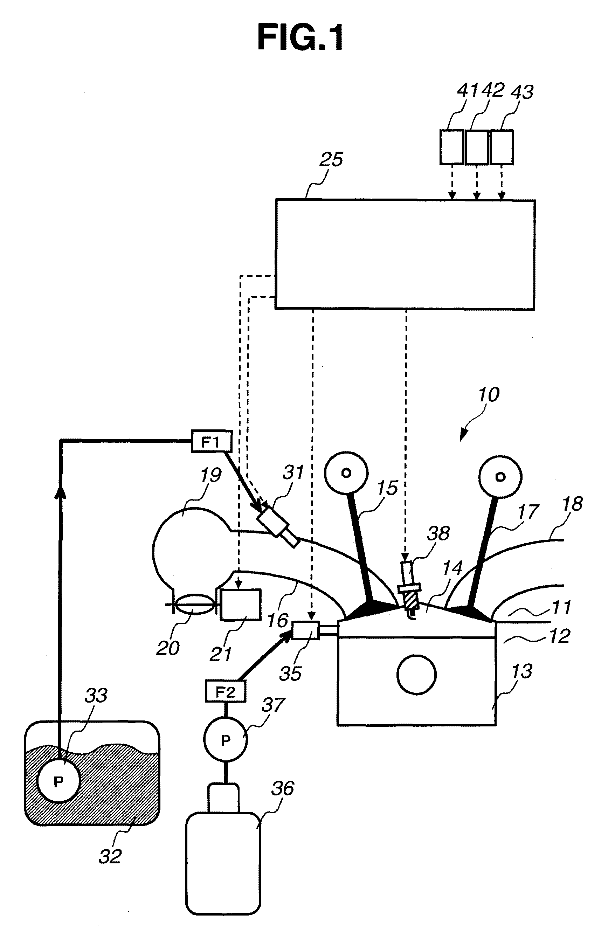

Fig. 1 shows the system diagram of an engine (an internal combustion engine) of the first embodiment of the invention. An engine 10 is formed with a combustion chamber 14, which is defined by a cylinder head 11, a cylinder block 12, and a piston 13.

Combustion chamber 14 is formed, so that intake air is introduced through an intake valve 15 via an intake port 16, serving as an intake-air passage, into the combustion chamber. Additionally, the combustion chamber is formed, so that exhaust gas is exhausted from the combustion chamber through an exhaust valve 17 into an exhaust port 18, serving as an exhaust-gas passage. A manifold section (an intake manifold) 19 is provided in a middle of the intake-air passage. A throttle valve 20 is further provided in the intake-air passage and located upstream of manifold section 19. The actuating shaft of throttle valve 20 is fixedly connected to an output shaft of a step motor 21. The output shaft of step motor 21 is rotated responsively to a command signal generated from an electronic engine control unit (ECU) 25, so as to operate throttle valve 20.

As a premixed mixture formation device, a fuel injection valve 31 is disposed in intake port 16. A liquid fuel F1, which is stored in a fuel tank 32, is supplied to fuel injection valve 31 by a fuel pump 33. Liquid fuel F1 is sprayed into intake port 16 by fuel injection valve 31, for example during an exhaust stroke, and then during the subsequent intake stroke a premixed mixture of the sprayed liquid fuel F1 and air is formed. In the shown embodiment, liquid fuel F1, stored in fuel tank 32, is a gasoline fuel. It will be understood that the liquid fuel is not limited to such a gasoline fuel, but that other kinds of liquid fuel may be used.

A gas injection valve 35, serving as a fuel gas supply device, is provided at a side part (a lateral part) of combustion chamber 14, namely, the intake-port side of the combustion chamber. A fuel gas F2, which is stored in a high-pressure gas canister 36, is supplied via a fuel-gas pump 37 into gas injection valve 35. Fuel gas F2, stored in gas canister 36, is a fuel gas whose burning velocity is greater than that of the premixed mixture formed in combustion chamber 14. In the shown embodiment, hydrogen, acetylene, or ethylene is used as the fuel gas. In particular, hydrogen is an easily ignitable fuel gas, and thus it has the advantage of superior ignitability, even during the igniting action within the fuel spray. Hydrogen has the further advantage of faster burning velocity and enlarged lean-combustion limit (or enlarged lean misfire limit), as compared to the premixed mixture. Therefore, by the use of hydrogen, it is possible to sustain or keep up the flame even within the spray of fuel gas F2 without misfire. In lieu thereof, a mixture of fuel gas F2 mixed with oxygen, functioning as an oxidizer, may be supplied to gas injection valve 35.

A spark plug 38, serving as an ignition device for igniting the spray of fuel gas F2 sprayed from gas injection valve 35, is located on the top face of combustion chamber 14 in such a manner as to be slightly offset from the center of the top face toward the side of installation of gas injection valve 35. It will be understood that the ignition device is not limited to such a spark plug 38, but that other types of igniters, such as a glow lamp, a laser ignition device or the like, may be used.

Signals from engine/vehicle sensors, such as a crank-angle sensor 41, a coolant temperature sensor 42, an accelerator-position sensor 43, and the like, are input into ECU 25. Electronic control for each of throttle valve 20, fuel injection valve 31, gas injection valve 35, and spark plug 38 is made based on the input information received by the ECU.

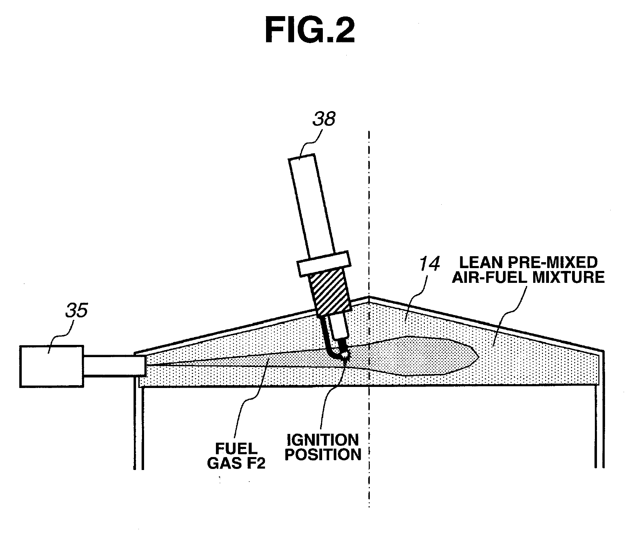

Fig. 2 is the cross section showing the detailed form of combustion of the lean premixed mixture in the combustion chamber in the case of the first embodiment.

Gas injection valve 35 is located at the intake-port side of combustion chamber 14, in such a manner as to horizontally inject fuel gas F2 toward the other side part of combustion chamber 14 opposite to the side of installation of gas injection valve 35. On the other hand, spark plug 38 is provided, so that the ignition position of the spark plug, namely a spark-plug gap, is located within the spray of fuel gas F2 sprayed from gas injection valve 35. Additionally, the spark plug is laid out or configured, so that the spark-plug gap is located to be slightly offset from a midpoint of the nozzle of gas injection valve 35, and the endpoint of the fuel-spray travel of the sprayed fuel gas F2, toward the side of installation of gas injection valve 35.

At the last stage of the compression stroke (near a top dead center position on the compression stroke), fuel gas F2 is injected from gas injection valve 35 into the lean premixed mixture of liquid fuel F1 and air, which mixture is preliminarily formed in combustion chamber 14. Then, a spray of the fuel gas F2 can be produced in the predetermined area of the combustion chamber, substantially extending from one end of the cylinder bore to the other end as viewed in the cylinder-bore direction defined by the centerline of the cylinder bore and including the igniter. Spark plug 38 is configured to ignite the spray of fuel gas F2, after the tip of the spray of the sprayed fuel gas F2 has passed through the ignition position of spark plug 38, namely the spark-plug gap, and after the middle stage of the fuel-injection time period for fuel gas F2 injected by gas injection valve 35. The flame, produced by spark-ignition, tends to enlarge along fuel-spray flow of fuel gas F2. At this time, the turbulent flow, occurring within the spray of fuel gas F2, tends to be strengthened. Thus, the flame rapidly develops or enlarges toward the tip of the spray of fuel gas F2. Thus, the jet flame, produced by combustion of the fuel-spray flow of fuel gas F2 diffused in combustion chamber 14, acts to burn the lean premixed mixture, which mixture is preliminarily formed in combustion chamber 14, by way of flame propagation. Additionally, turbulent mixing promotes combustion of the lean premixed mixture.

In the first embodiment, a burn time duration of fuel gas F2 in combustion chamber 14 can be controlled by varying the fuel injection timing of gas injection valve 35 (that is, the fuel-injection start timing and the fuel-injection termination timing), and/or the ignition timing of spark plug 38. On the other hand, a time duration of generation of heat of combustion for fuel gas F2 can be controlled by varying the quantity of fuel injected by gas injection valve 35. Therefore, the fuel injection quantity and fuel injection timing of gas injection valve 35, and the ignition timing of spark plug 38 are set, while fully taking into account various factors, that is, thermal efficiency, exhaust emissions, noise, vibrations and the like. These set values are pre-stored in memories of ECU 25. Thus, it is possible to suitably control the timing of generation of heat of combustion and the burning velocity of the lean premixed mixture by controlling the fuel injection quantity and fuel injection timing of gas injection valve 35, while retrieving their target values based on operating conditions of engine 10 (such as engine load and engine speed) from a pre-stored look-up table concerning the set values.

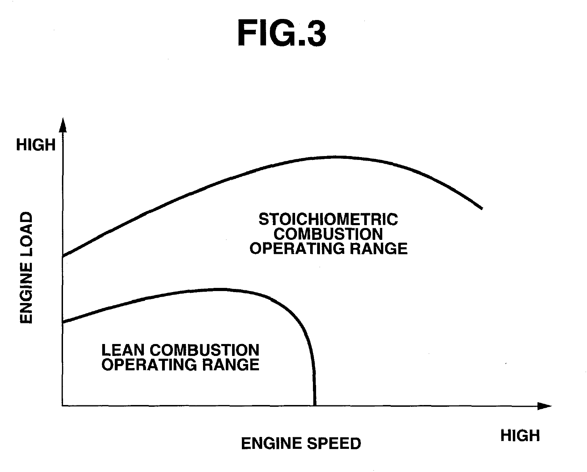

Fig. 3 is the diagram showing switching between combustion modes of the mixture in the combustion chamber in the case of the first embodiment.

In the first embodiment, during low-load and low-speed operation of engine 10, it is determined that the engine is operated in a lean combustion operating range. As discussed above, the lean premixed mixture is ignited and burned, while utilizing fuel gas F2. This realizes the enhanced thermal efficiency and the reduced exhaust emissions. Conversely, during high-load and high-speed operation of engine 10, it is determined that the engine is operated in a stoichiometric combustion operating range. Only the mixture of liquid fuel F1 and air is supplied into combustion chamber 14, and then the supplied mixture is directly spark-ignited for stoichiometric combustion. This realizes the increased power output.

According to the first embodiment, the spray of fuel gas F2 passes through the ignition position of the ignition device (spark plug 38) and diffuses into combustion chamber 14. The spray of fuel gas F2 produces a strong turbulent flow in combustion chamber 14. Therefore, the mixing action of the flame, produced by combustion of fuel gas F2, with the unburned lean premixed mixture can be promoted, and as a result the lean premixed mixture can be certainly burned.

According to the first embodiment, the flame, produced by combustion of fuel gas F2, tends to enlarge along the spray of fuel gas F2. Thus, it is possible to multipoint-ignite the lean premixed mixture at a plurality of points in combustion chamber 14.

According to the first embodiment, fuel gas F2 is injected into combustion chamber 14, while evaporated. Thus, it is possible to avoid soot and smoke, which are produced by the ignition device (spark plug 38) due to a lack of evaporation of liquid fuel, which is directly injected into combustion chamber 14.

According to the first embodiment, the ignition position of the ignition device (spark plug 38) is arranged in such a manner as to be slightly offset from a midpoint of the nozzle of the fuel gas supply device (gas injection valve 35) and the endpoint of the fuel-spray travel of the sprayed fuel gas F2, toward the side of installation of the fuel gas supply device (gas injection valve 35). Thus, it is possible to secure an adequate space that permits the spray of fuel gas F2, sprayed from the fuel gas supply device (gas injection valve 35), to be scattered toward the downstream side of the ignition position. Therefore, the turbulent-flow strengthening action, attained by the fuel-spray flow of fuel gas F2, can be effectively utilized even downstream of the ignition position. As a result, it is possible to multipoint-ignite the lean premixed mixture at a plurality of points in the combustion chamber.

According to the first embodiment, the ignition device (spark plug 38) is configured to ignite the spray of fuel gas F2, after the tip of the spray of the sprayed fuel gas F2 has passed through the ignition position of the ignition device (spark plug 38), and after the middle stage of the fuel-injection time period for fuel gas F2 injected by gas injection valve 35. An igniting action for the spray of fuel gas F2 is initiated, after an adequate turbulent-flow field has been produced in combustion chamber 14 by way of the spray of fuel gas F2, thereby promoting the flame diffusion along the spray of fuel gas F2. Thus, it is possible to more certainly burn the lean premixed mixture.

According to the first embodiment, the fuel gas supply device (gas injection valve 35) is laid out at a side part (a lateral part) of combustion chamber 14, in such a manner as to inject fuel gas F2 toward the other side part of combustion chamber 14 opposite to the side of installation of the fuel gas supply device (gas injection valve 35). This ensures the ease of installation of the fuel gas supply device (gas injection valve 35), as compared to the layout of the fuel gas supply device (gas injection valve 35) on the center of the top face of combustion chamber 14.

According to the first embodiment, fuel gas F2 is a fuel gas (such as hydrogen, acetylene, ethylene, or the like) whose burning velocity is greater than that of the premixed mixture. Thus, it is possible to certainly ignite and burn fuel gas F2 in the jet flow of fuel gas F2 by the ignition device (spark plug 38). In addition to the above, it is possible to rapidly enlarge the flame, produced by the igniting and burning action, along the spray of fuel gas F2, thus suppressing incomplete combustion of the lean premixed mixture from occurring. This realizes the enlarged lean-combustion limit.

According to the first embodiment, fuel gas F2 may be a mixture containing an oxidizer, such as oxygen. By the use of such a mixture containing an oxidizer, even when the concentration of fuel contents within the spray of fuel gas F2 is excessive or richer, it is possible to suppress incomplete combustion, which may occur due to a lack of oxygen. Simultaneously, it is possible to promote the flame enlargement along of the spray of fuel gas F2.

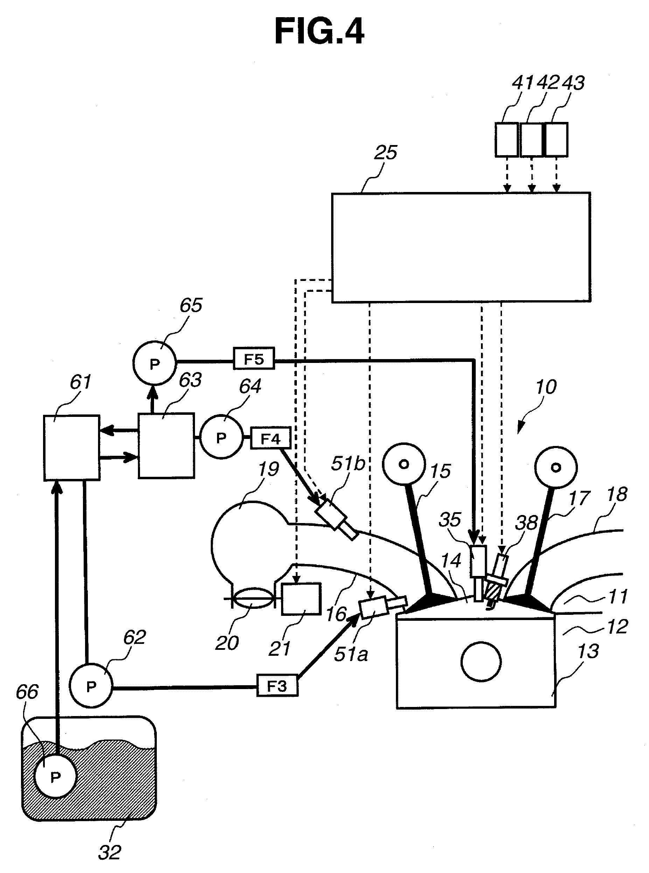

Hereinafter, the second embodiment of the invention is explained. Fig. 4 shows the system diagram of an engine (an internal combustion engine) of the second embodiment of the invention. Only the points of the second embodiment, differing from the first embodiment explained with reference to Fig. 1, are hereunder described.

As seen in Fig. 4, a first fuel injection valve 51 a and a second fuel injection valve 51 b, both serving as the premixed mixture formation device, are provided in intake port 16. A hydrocarbon fuel F3 having a low self-ignitability is supplied to first fuel injection valve 51 a via a fuel separator 61 (described later) by a fuel pump 62. A hydrocarbon fuel F4 having a high self-ignitability is supplied to second fuel injection valve 51 b via a fuel reformer 63 (described later) by a fuel pump 64. Hydrocarbon fuel F3, having a low self-ignitability, is a hydrocarbon fuel that contains a high percentage of aromatic hydrocarbons, isoparaffin, olefin, and so forth. Hydrocarbon fuel F4, having a high self-ignitability, is a hydrocarbon fuel that contains a high percentage of normal paraffin.

Gas injection valve 35, serving as the fuel gas supply device, is located at the center of the top face of combustion chamber 14, for injecting fuel gas F5 conically into combustion chamber 14. Fuel gas F5 is supplied to gas injection valve 35 via fuel reformer 63 (described later) by fuel pump 65.

Spark plug 38, serving as the ignition device for igniting the spray of fuel gas F5 sprayed from gas injection valve 35, is located on the top face of combustion chamber 14 in such a manner as to be slightly offset from a midpoint of the nozzle of gas injection valve 35 located at the center of the top face of combustion chamber 14 and a side part (a lateral part, that is, the endpoint of the fuel-spray travel of the sprayed fuel gas F5) of combustion chamber 14, toward the side of installation of gas injection valve 35.

The hydrocarbon fuel, supplied from the outside, is fed from fuel tank 32, which stores the fuel, via a low-pressure fuel pump 66 to fuel separator 61. Within the fuel separator 61, normal paraffin contained in the fuel is separated by a separator filter (or a separator membrane) installed in fuel separator 61. The separated normal paraffin is fed via a fuel pump (not shown) to fuel reformer 63. Fuel reformer 63 is configured to be able to receive exhaust heat from engine 10. Within fuel reformer 63, part of the normal paraffin separated by fuel separator 61 is converted into hydrogen (fuel gas F5) and hydrocarbon fuel F3 having a low self-ignitability, by way of dehydrogenation (reforming reaction) utilizing a catalyst (such as platinum system catalyst). As an example of such a reaction, when fuel-reforming normal heptane (C₇H₁₆) by way of cyclodehydrogenation by fuel reformer 63, the chemical reaction is represented by the following reaction formula.

C₇H₁₆ (normal heptane) → C₇H₈ (toluene) + 4H₂

wherein the cyclodehydrogenation is an endothermic reaction.

Hydrogen (fuel gas F5), produced by fuel reformer 63, is supplied to gas injection valve 35 by fuel gas pump 65. Hydrocarbon fuel F3, having a low self-ignitability and produced by fuel reformer 63, is returned via the fuel pump (not shown) to fuel separator 61. Thereafter, as the hydrocarbon fuel F3 having a low self-ignitability, the returned hydrocarbon fuel is supplied via fuel pump 62 to the first fuel injection valve 51 a together with the residual fuel obtained after separation of normal paraffin by the separator membrane installed in fuel separator 61. On the other hand, as the hydrocarbon fuel F4 having a high self-ignitability, normal paraffin, which is not subjected to the reforming reaction within fuel reformer 63, is supplied via fuel pump 64 to the second fuel injection valve 51 b.

In the second embodiment, part of normal paraffin, separated by fuel separator 61, may be converted to produce hydrogen (fuel gas F5) by way of partial oxidation (reforming reaction) utilizing a rhodium system catalyst, within fuel reformer 63. As an example of such a reaction, when fuel-reforming normal heptane (C₇H₁₆) by way of partial oxidation by fuel reformer 63, the chemical reaction is represented by the following reaction formula.

C₇H₁₆ (normal heptane) + 3.5O₂ → 7CO + 8H₂

wherein the partial oxidation is an exothermic reaction.

Hydrogen (fuel gas F5), produced by fuel reformer 63, is supplied via fuel gas pump 65 to gas injection valve 35. As the hydrocarbon fuel F4 having a high self-ignitability, part of normal paraffin, which is not subjected to the reforming reaction within fuel reformer 63, is supplied via fuel pump 64 to the second fuel injection valve 51 b.

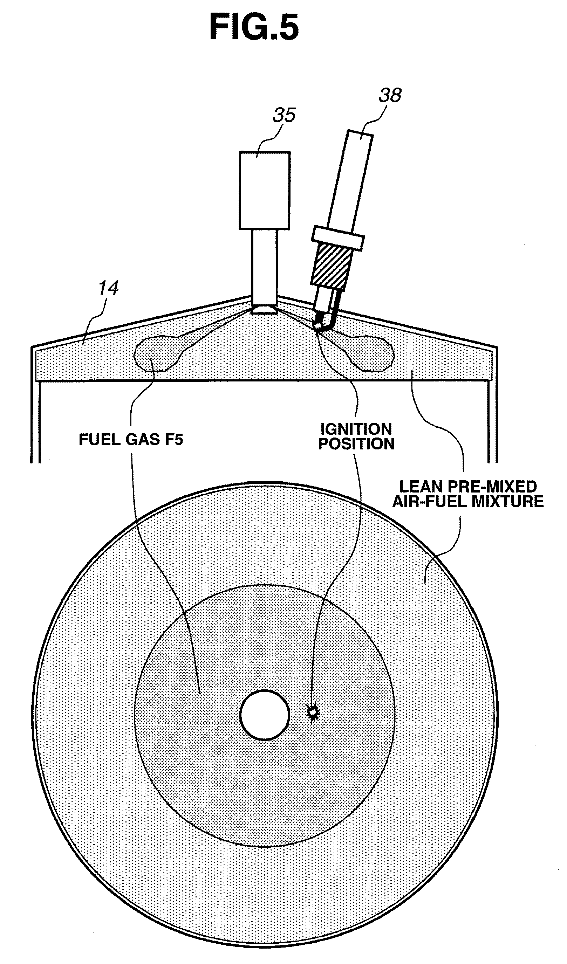

Fig. 5 is the cross section showing the detailed form of combustion of the lean premixed mixture in the combustion chamber in the case of the second embodiment.

Gas injection valve 35 is located at the center of the top face of combustion chamber 14, for injecting fuel gas F5 conically (in the form of a hollow cone) into combustion chamber 14. On the other hand, spark plug 38 is configured so that its ignition position (a spark-plug gap) is located within the spray of fuel gas F5, injected by gas injection valve 35, in such a manner to be slightly offset from a midpoint of the nozzle of gas injection valve 35 and the endpoint of the fuel-spray travel of the sprayed fuel gas F5 (a side part of combustion chamber 14), toward the side of installation of gas injection valve 35.

Fuel gas F5 is injected from gas injection valve 35 into a lean premixed mixture, preliminarily formed in combustion chamber 14 by mixing hydrocarbon fuel F3 having a low self-ignitability and hydrocarbon fuel F4 having a high self-ignitability with air, at the last stage of a compression stroke (near a top dead center position on the compression stroke). A spray of the fuel gas is formed or produced in a predetermined area of the combustion chamber, substantially extending from one end of a cylinder bore to the other end as viewed in a cylinder-bore direction defined by a centerline of the cylinder bore and including an igniter. Spark plug 38 is configured to ignite the spray of fuel gas F5, after the tip of the spray of the sprayed fuel gas F5 has passed through the ignition position of spark plug 38, namely the spark-plug gap, and after the middle stage of the fuel-injection time period for fuel gas F5 injected by gas injection valve 35. The flame, produced by spark-ignition, tends to enlarge along fuel-spray flow of fuel gas F5. At this time, the turbulent flow, occurring within the spray of fuel gas F5, tends to be strengthened. Thus, the flame rapidly develops or enlarges toward the tip of the spray of fuel gas F5. Thus, the jet flame, produced by combustion of the fuel-spray flow of fuel gas F5 diffused in combustion chamber 14, acts to burn the lean premixed mixture, which is preliminarily formed in combustion chamber 14, by way of flame propagation. Additionally, turbulent mixing promotes combustion of the lean premixed mixture. Furthermore, owing to the presence of hydrocarbon fuel F4 having a high self-ignitability, locally self-ignited combustion in combustion chamber 14 can be induced. Thus, it is possible to certainly satisfactorily burn the lean premixed mixture within the combustion chamber 14 as widely as possible.

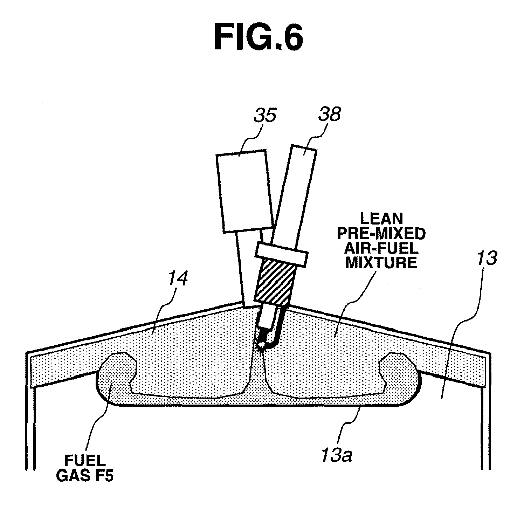

In the second embodiment, instead of using the form of combustion of the lean premixed mixture seen in Fig. 5, the form of combustion of the lean premixed mixture seen in Fig. 6 may be used.

Gas injection valve 35 shown in Fig. 6 has a single nozzle, which is configured to inject fuel gas F5 toward the center section of the piston crown of a reciprocating piston 13. Piston 13 has a recessed cavity 13a formed in the center section of the piston crown. The spray of fuel gas F5, injected from gas injection valve 35, impinges with cavity 13a, and then diffuses along the bottom face of cavity 13a. Thereafter, the fuel spray travels up along the peripheral wall surface of cavity 13a and thus spreads out over combustion chamber 14. On the other hand, spark plug 38 is configured so that its ignition position (a spark-plug gap) is located within the spray of fuel gas F5, injected by gas injection valve 35, in such a manner to be slightly offset from a midpoint of the nozzle of gas injection valve 35 and the endpoint of the fuel-spray travel of the sprayed fuel gas F5 (i.e., the bottom face of cavity 13a at the top dead center position on the compression stroke), toward the side of installation of gas injection valve 35.

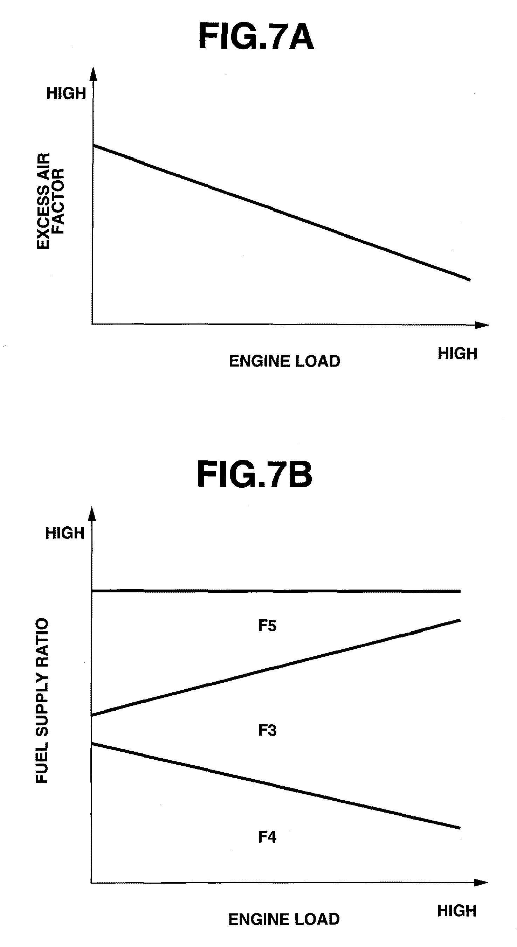

Fig. 7A is the characteristic diagram showing the relationship between the engine load and the excess air factor in the lean combustion operating range. A fuel supply control device, which is incorporated in ECU 25, is configured to control throttle valve 20, the first fuel injection valve 51 a, the second fuel injection valve 51 b, and gas injection valve 35, in a manner so as to increase the excess air factor, as the engine load decreases. As a result, the premixed mixture formed in combustion chamber 14 is leaned out, as the engine load decreases.

Fig. 7B is the characteristic diagram showing the relationship between the engine load and the fuel supply ratio, in the lean combustion operating range. A premixed mixture fuel supply control device, which is incorporated in ECU 25, is configured to control the first fuel injection valve 51 a and the second fuel injection valve 51 b, in a manner so as to decrease a fuel-supply ratio of hydrocarbon fuel F3 having a low self-ignitability and to increase a fuel-supply ratio of hydrocarbon fuel F4 having a high self-ignitability, as the engine load decreases. As a result, the self-ignitability of the premixed mixture formed in combustion chamber 14 increases, as the engine load decreases.

Additionally, the fuel supply control device incorporated in ECU 25 is configured to control gas injection valve 35 in a manner so as to increase a fuel-supply ratio of fuel gas F5, as the engine load decreases. As a result, it is possible to strengthen the jet flame produced by combustion of the spray of fuel gas F5, thus enhancing the effect to promote combustion of the premixed mixture, and ensuring complete combustion of the premixed mixture.

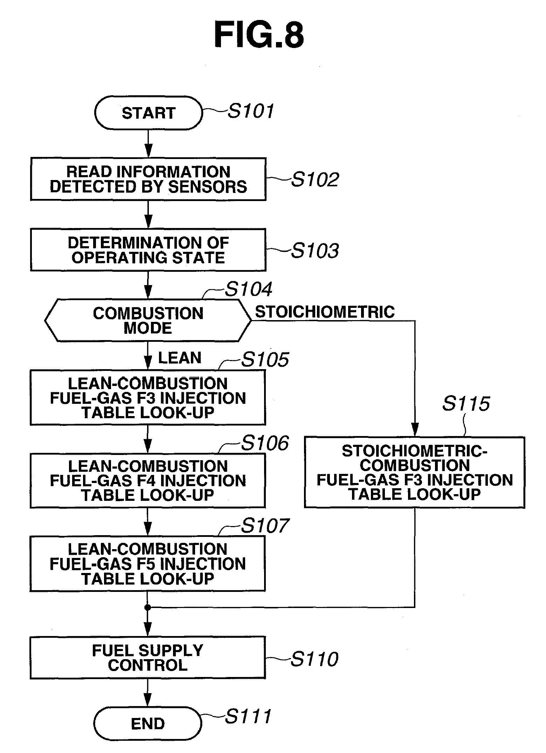

Fig. 8 is the flow chart showing the fuel supply control flow of the second embodiment.

At step S102, signals generated from various sensors, that is, crank-angle sensor 41, coolant temperature sensor 42, accelerator-position sensor 43, and the like, are read by ECU 25. At step S103, engine operating states, such as engine load and engine speed, are determined based on input information from the sensors. On the basis of the above decision result, at step S104, a combustion mode for the mixture in combustion chamber 14 is determined, utilizing the characteristic diagram of Fig. 3. During low-load and low-speed operation, it is determined that the engine is operated in a lean combustion operating range. Conversely, during high-load and high-speed operation, it is determined that the engine is operated in a stoichiometric combustion operating range.

When step S104 determines that the engine is operated in the lean combustion operating mode, the routine proceeds to step S105, at which time the fuel injection quantity and fuel injection timing of fuel injection valve 51 a, provided to inject hydrocarbon fuel F3 having a low self-ignitability, are retrieved and determined based on a "lean-combustion fuel-gas F3 injection table" pre-stored in ECU 25. Next, the routine proceeds to step S106, at which time the fuel injection quantity and fuel injection timing of fuel injection valve 51 b, provided to inject hydrocarbon fuel F4 having a high self-ignitability, are retrieved and determined based on a "lean-combustion fuel-gas F4 injection table" pre-stored in ECU 25. Next, the routine proceeds to step S107, at which time the fuel injection quantity and fuel injection timing of gas injection valve 35, provided to inject fuel gas F5, are retrieved and determined based on a "lean-combustion fuel-gas F5 injection table" pre-stored in ECU 25. Then, the routine proceeds to step S110. At step S110, the fuel-supply quantity and fuel-supply timing of each of the fuels F3-F5 to be supplied to engine 10 are controlled based on the decision results of steps S105, S106, and S107, by the fuel supply control device and the premixed mixture fuel supply control device, both incorporated in ECU 25.

Conversely, when step S104 determines that the engine is operated in the stoichiometric combustion operating mode, the routine proceeds to step S115, at which time the fuel injection quantity and fuel injection timing of fuel injection valve 51 a, provided to inject hydrocarbon fuel F3 having a low self-ignitability, are retrieved and determined based on a "stoichiometric-combustion fuel-gas F3 injection table" pre-stored in ECU 25. Thereafter, the routine proceeds to step S110. At step S110, the fuel-supply quantity and fuel-supply timing of the fuel (only the hydrocarbon fuel F3 having a low self-ignitability) to be supplied to engine 10 are controlled based on the decision result of step S115, by the fuel supply control device and the premixed mixture fuel supply control device, both incorporated in ECU 25.

In particular, according to the second embodiment, the fuel gas supply device (gas injection valve 35) is located at the center of the top face of combustion chamber 14, for injecting fuel gas F5 conically into combustion chamber 14. The spray of fuel gas F5 can be diffused impartially within combustion chamber 14, and thus it is possible to suppress the localized occurrence of unburned hydrocarbon in combustion chamber 14.

According to the second embodiment, the fuel gas supply device (gas injection valve 35) has a single nozzle and is located at the center of the top face of combustion chamber 14, for injecting fuel gas F5 toward the cavity 13a of the crown of piston 13. Thus, it is possible to use the fuel gas supply device (gas injection valve 35) having a simpler configuration rather than the previously-discussed case that fuel gas F5 is injected conically into combustion chamber 14. Therefore, it is possible to more easily suppress the localized occurrence of unburned hydrocarbon in combustion chamber 14.

According to the second embodiment, fuel gas F5 is a fuel gas, produced when fuel-reforming a hydrocarbon fuel, supplied externally, by way of a reforming reaction. Thus, it is possible to limit the externally supplied fuel to one type of fuel. Furthermore, there is no necessity for an additional gas canister that stores fuel gas F5. Thus, it is possible to down-size the fuel-supply system in comparison with the use of the additional gas canister.

According to the second embodiment, the reforming reaction by which fuel gas F5 is produced, utilizes exhaust heat from the internal combustion engine 10. Thus, it is possible to enhance a thermal efficiency, while suppressing an energy loss due to the exhaust heat.

According to the second embodiment, the reforming reaction by which fuel gas F5 is produced includes dehydrogenation, and thus it is possible to produce high-purity hydrogen gas, rather than partial oxidation. This enables the reduced injection quantity of fuel injected from the gas fuel supply device (gas injection valve 35), as compared to partial oxidation, and thus it is possible to down-size the fuel-supply system.

According to the second embodiment, the reforming reaction by which fuel gas F5 is produced may include partial oxidation (an exothermic reaction). As a result, it is possible to decrease the quantity of heat to be supplied when the reforming reaction is made, as compared to dehydrogenation (an endothermic reaction).

According to the second embodiment, hydrocarbon fuel F3 having a low self-ignitability is supplied to the premixed mixture formation device. Thus, it is possible to suppress the occurrence of knocking due to rapid combustion.

According to the second embodiment, hydrocarbon fuel F4 having a high self-ignitability is supplied to the premixed mixture formation device. Thus, during low-load operation that the premixed mixture is very lean, in addition to the effect to promote combustion by way of the spray of fuel gas F5, it is possible to provide the effect to promote combustion by way of self-ignition of the premixed mixture, thereby achieving the enlarged lean-combustion limit.

According to the second embodiment, ECU 25 employs the fuel supply control device configured to execute fuel-supply control, in such a manner as to lean out the premixed mixture formed in combustion chamber 14 by the premixed mixture formation device and to increase the fuel-supply quantity of fuel gas F5 to be supplied from the fuel gas supply device (gas injection valve 35) into combustion chamber 14, as the load of the internal combustion engine (engine 10) decreases. During low load operation, it is possible to suppress unstable combustion (rough burning) of the premixed mixture by increasing the effect to promote combustion by way of the spray of fuel gas F5 injected into the premixed mixture. Conversely, when the premixed mixture is excessively rich during high load operation, the fuel-supply quantity of fuel gas F5 is controlled to reduce. Thus, it is possible to suppress the heat release velocity from excessively increasing by decreasing the effect to promote combustion by way of the spray of fuel gas F5. As a result, it is possible to suppress the occurrence of noise and vibrations.

According to the second embodiment, there are two kinds of fuels for use in the premixed mixture formation device, that is, hydrocarbon fuel F4 having a high self-ignitability and hydrocarbon fuel F3 having a low self-ignitability. ECU 25 employs the premixed mixture fuel supply control device configured to execute fuel-supply ratio control, in such a manner as to increase a fuel-supply ratio of hydrocarbon fuel F4 having a high self-ignitability and to decrease a fuel-supply ratio of hydrocarbon fuel F3 having a low self-ignitability, as the load of the internal combustion engine (engine 10) decreases. Thus, it is possible to enlarge the lean-combustion limit during low load operation and to suppress the occurrence of knocking during high load operation.

According to the second embodiment, hydrocarbon fuel F3 having a low self-ignitability, is a fuel produced when fuel-reforming a hydrocarbon fuel, supplied externally, by way of a reforming reaction. There is no necessity for an additional fuel tank that stores hydrocarbon fuel F3. Thus, it is possible to down-size the fuel-supply system in comparison with the use of the additional fuel tank.

According to the second embodiment, the reforming reaction by which hydrocarbon fuel F3 having a low self-ignitability is produced includes cyclodehydrogenation, and thus it is possible to produce a low self-ignitability fuel that contains a high percentage of aromatic hydrocarbons, and simultaneously to produce hydrogen gas (fuel gas F5).

According to the second embodiment, hydrocarbon fuel F4 having a high self-ignitability, is a fuel obtained when separating a hydrocarbon fuel, supplied externally, by means of a separator membrane. There is no necessity for an additional fuel tank that stores hydrocarbon fuel F4. Thus, it is possible to down-size the fuel-supply system in comparison with the use of the additional fuel tank.

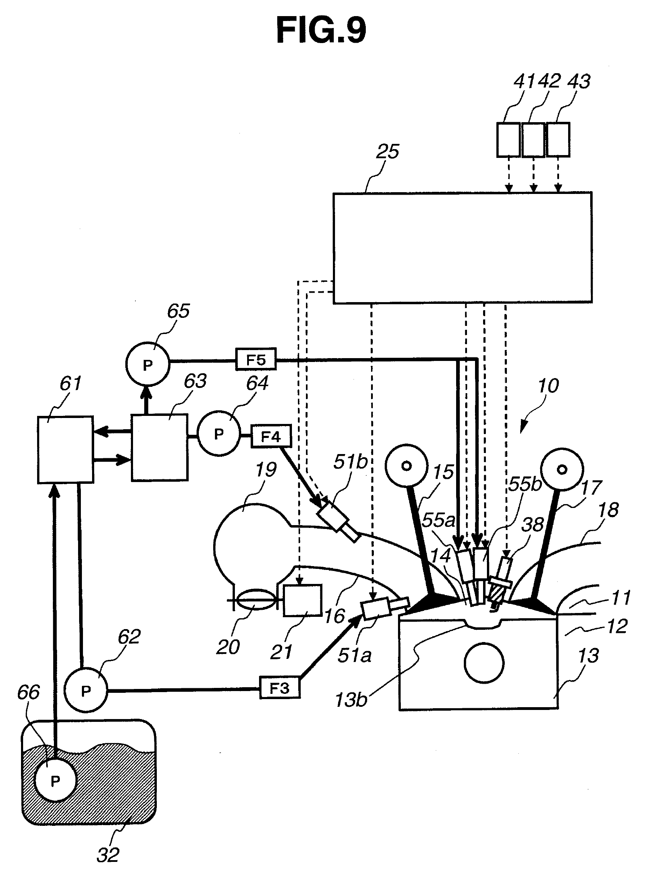

Hereinafter, the third embodiment of the invention is explained. Fig. 9 shows the system diagram of an engine (an internal combustion engine) of the third embodiment of the invention. Only the points of the third embodiment, differing from the second embodiment explained with reference to Fig. 4, are hereunder described.

As seen in Fig. 9, a first gas injection valve 55a and a second gas injection valve 55b, both serving as the fuel gas supply device, are located at the center of the top face of combustion chamber 14. The first gas injection valve 55a has a single nozzle, for injecting fuel gas F5 toward the center of the piston crown of a reciprocating piston 13. Piston 13 has a recessed cavity 13b (a small bowl) formed in the center section of the piston crown. On the other hand, the second gas injection valve 55b is configured to inject fuel gas F5 radially into combustion chamber 14. In the third embodiment, fuel gas F5 is supplied to each of the first and second gas injection valves 55a-55b via fuel reformer 63 by fuel pump 65. Fuel-supply control for the first gas injection valve 55a and fuel-supply control for the second injection valve 55b can be made independently of each other by the fuel supply control device, incorporated in ECU 25.

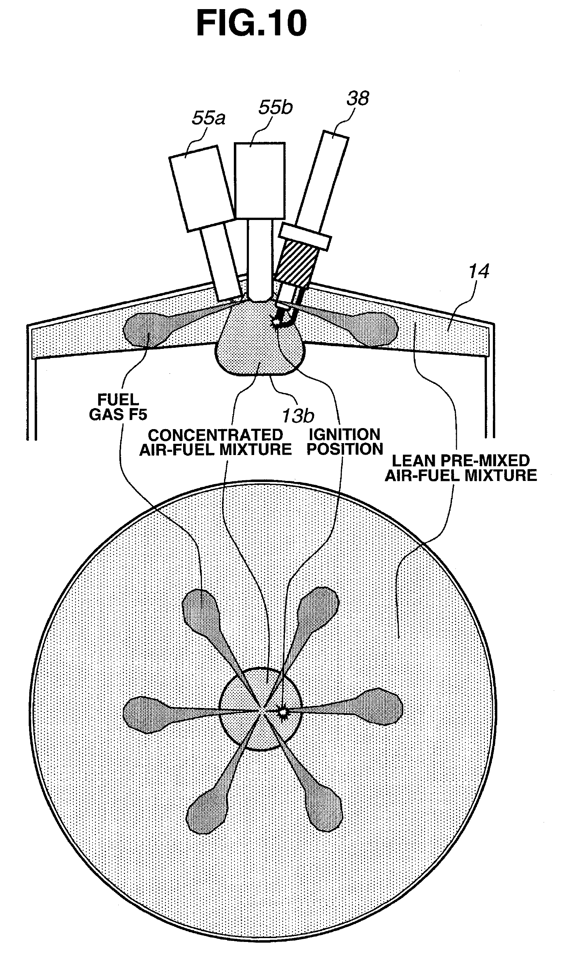

Fig. 10 is the cross section showing the detailed form of combustion of the lean premixed mixture in the combustion chamber in the case of the third embodiment.

Fuel gas F5 is injected from the first gas injection valve 55a into a lean premixed mixture, preliminarily formed in combustion chamber 14 by mixing hydrocarbon fuel F3 having a low self-ignitability and hydrocarbon fuel F4 having a high self-ignitability with air, in such a manner as to direct the fuel gas toward the recessed cavity 13b (small bowl) formed in the center section of the crown of piston 13, at the last stage of a compression stroke (near a top dead center position on the compression stroke). As a result, the concentrated mixture obtained by mixing the lean premixed mixture with the spray of fuel gas F5, is formed in the specified space of combustion chamber 14 between the first gas injection valve 55a and cavity 13b (small bowl). Next, fuel gas F5 is injected from the second gas injection valve 55b radially into combustion chamber 15. At this time, a spray of fuel gas F5, injected radially, is formed in such a manner as to penetrate the concentrated air-fuel mixture. On the other hand, spark plug 38 is configured so that its ignition position (a spark-plug gap) is located within the concentrated mixture, in such a manner to be slightly offset from a midpoint of the nozzle of gas injection valve 55a and the endpoint of the fuel-spray travel of the concentrated mixture (i.e., the bottom face of cavity 13b (small bowl) at the top dead center position on the compression stroke), toward the side of installation of gas injection valve 55a, for spark-ignition and burning of the concentrated mixture. The flame, produced by spark-ignition and burning of the concentrated mixture, tends to enlarge toward the radial spray of the fuel gas F5 injected radially. Thus, the jet flame of the radial spray of fuel gas F5 is produced within the combustion chamber 14 as widely as possible.

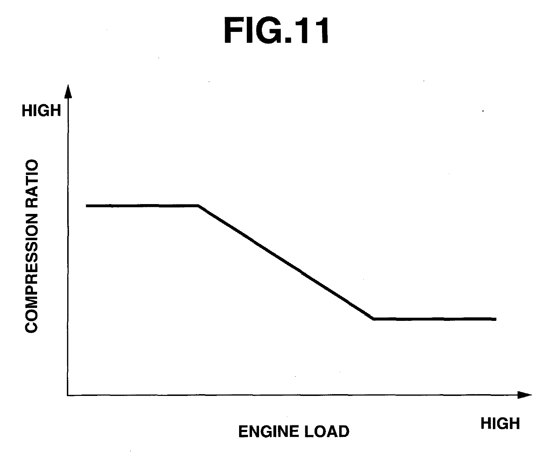

Fig. 11 is the characteristic diagram used in setting of a compression ratio to be varied relative to engine load in the case of the third embodiment.

The engine of the third embodiment employs a variable compression ratio mechanism (not shown), which is configured to variably adjust a compression ratio of engine 10. Also provided is a compression ratio control device (not shown) incorporated in ECU 25, for controlling the compression ratio based on engine load, via the variable compression ratio mechanism. The compression ratio control device is configured to execute compression-ratio control based on a set value of the compression ratio retrieved from the engine-load, versus the compression ratio look-up table shown in Fig. 11. The settings of compression ratio relative to engine load are preprogrammed to increase the compression ratio so as to enhance a thermal efficiency during low load operation of engine 10, and to decrease the compression ratio so as to avoid abnormal combustion such as knocking during high load operation.

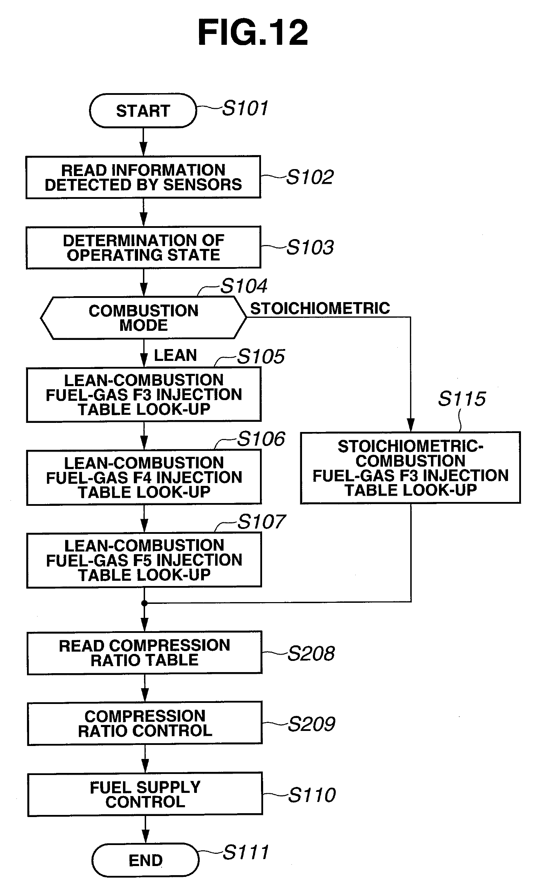

Fig. 12 is the flow chart showing the fuel supply control flow of the third embodiment. Only the points of the third embodiment, differing from the second embodiment explained with reference to Fig. 8, are hereunder described.

At step S107 previously discussed with reference to Fig. 8, the fuel injection quantity and fuel injection timing of gas injection valve 35, provided to inject fuel gas F5, are retrieved and determined based on a "lean-combustion fuel-gas F5 injection table" pre-stored in ECU 25. Step S107 of Fig. 12 differs from step S107 of Fig. 8, in that the fuel injection quantity and fuel injection timing of each of the first and second gas injection valves 55a-55b, both provided to inject fuel gas F5, are determined based on a "lean-combustion fuel-gas F5 injection table" pre-stored in ECU 25.

As a further point different from the flow of Fig. 8, as can be seen in Fig. 12, the compression ratio table look-up and compression ratio control are made via respective steps S208-S209, before execution of fuel-supply control of step S110.

At step S208, the look-up operation of the compression ratio table (see Fig. 11) is made based on the engine operating states determined through step S103. Thereafter, the routine proceeds to step S209.

At step S209, the compression ratio is controlled by the compression ratio control device. Thereafter, the routine proceeds to step S110 at which fuel-supply control is executed in the same manner as Fig. 8.

In particular, according to the third embodiment, the fuel gas supply device is constructed by the first and second gas injection valves 55a-55b, both located at the center of the top face of combustion chamber 14. Additionally, the concentrated mixture is formed by mixing the premixed mixture with a spray of fuel gas F5 by way of injection of fuel gas F5 from the first gas injection valve toward cavity 13b (small bowl) formed in the piston crown. Thereafter, a radial spray of fuel gas F5 is produced by way of radial injection of fuel gas F5 from the second gas injection valve into combustion chamber 14. The concentrated mixture is spark-ignited and burned by the ignition device (spark plug 38), and then the radial spray of fuel gas F5 can be ignited by way of the flame, produced by spark-ignition and burning of the concentrated mixture. The spray of fuel gas F5 can be diffused impartially within combustion chamber 14, and thus it is possible to suppress the localized occurrence of unburned hydrocarbon in combustion chamber 14.

While the invention has been disclosed with reference to certain embodiments, numerous modifications, alterations, and changes to the described embodiments are possible without departing from the sphere and scope of the invention, as defined in the appended claims and equivalents thereof. For example, in the shown embodiments, the inventive concept is applied to a premixed mixture formed all over the combustion chamber 14. However, the inventive concept is applicable to a premixed mixture formed in a partial space of combustion chamber 14. Accordingly, it is intended that the invention not be limited to the described embodiments, but that it have the full scope defined by the language of the following claims.

This application claims priority from Japanese Patent Application No. 2007-111085, filed 20th April 2007, the contents of which are expressly incorporated herein by reference.

## Claims

1. An internal combustion engine comprising:
means for forming a premixed mixture of fuel and air in a combustion chamber;
injection means for injecting fuel gas directly into the combustion chamber; and
ignition means for igniting the fuel gas;
wherein the injection means is arranged to inject the fuel gas into the premixed mixture near a top dead center of a compression stroke such that a spray of the fuel gas passes through a firing position of the ignition means to produce the spray of the fuel gas in a predetermined area substantially extending from one end of a cylinder bore to the other end as viewed in a cylinder-bore direction defined by a centerline of the cylinder bore; and
wherein the ignition means is arranged to directly ignite the spray of the fuel gas and to ignite and burn the premixed mixture by way of flame propagation along the spray of the fuel gas.

2. An engine as claimed in claim 1, wherein the firing position of the ignition means is offset from a midpoint of a nozzle of the injection means and an endpoint of the fuel-spray travel of the fuel gas, toward the nozzle of the injection means.

3. An engine as claimed in claim 1 or claim 2, wherein the ignition means is arranged to ignite the spray of the fuel gas after a tip of the spray of the fuel gas has passed through the firing position of the ignition means and after a middle stage of a fuel-injection time period for the fuel gas injected by the injection means.

4. An engine as claimed in any preceding claim, wherein the injection means comprises a gas injection valve located:
at a side part of the combustion chamber for injecting the fuel gas toward the other side part of the combustion chamber opposite to the side of installation of the gas injection valve;
at a center of a top face of the combustion chamber for injecting the fuel gas conically into the combustion chamber; and/or
at a center of a top face of the combustion chamber for injecting the fuel gas toward a cavity formed in a crown of a reciprocating piston.

5. An engine as claimed in any preceding claim, wherein the injection means comprises a first gas injection valve and a second gas injection valve, the first and second gas injection valves being located at a center of a top face of the combustion chamber;
wherein the first gas injection valve is arranged to inject the fuel gas toward a cavity formed in a crown of a reciprocating piston for forming a concentrated mixture by mixing the premixed mixture with the spray of the fuel gas, and thereafter the second gas injection valve is arranged to inject the fuel gas radially into the combustion chamber for forming a radial spray; and
wherein the concentrated mixture is ignited and burned by the ignition means and then the radial spray is ignited by way of a flame produced by ignition and burning of the concentrated mixture.

6. An engine as claimed in any preceding claim, wherein the fuel gas comprises:
a fuel gas having a burning velocity that is greater than a burning velocity of the premixed mixture; and/or
a fuel gas produced when fuel-reforming a hydrocarbon fuel supplied externally by way of a reforming reaction.

7. An engine as claimed in any preceding claim, wherein the reforming reaction that produces the fuel gas comprises:
a utilization of exhaust heat from the internal combustion engine;
dehydrogenation; and/or
partial oxidation.

8. An engine as claimed in any preceding claim, wherein the fuel gas comprises hydrogen and/or a mixture containing an oxidizer.

9. An engine as claimed in any preceding claim, comprising fuel supply control means for executing fuel-supply control, for leaning out the premixed mixture and for increasing a fuel-supply ratio of the fuel gas as an engine load decreases.

10. An engine as claimed in any preceding claim, wherein the fuel supplied to the means for forming a premixed mixture comprises a hydrocarbon fuel having a high self-ignitability and a hydrocarbon fuel having a low self-ignitability, the engine comprising premixed fuel supply control means for executing fuel-supply control, for increasing a fuel-supply ratio of the hydrocarbon fuel having the high self-ignitability and for decreasing a fuel-supply ratio of the hydrocarbon fuel having the low self-ignitability, as an engine load decreases.

11. An engine as claimed in claim 10, wherein:
the hydrocarbon fuel having the low self-ignitability comprises a fuel gas, produced when fuel-reforming a hydrocarbon fuel supplied externally, by way of a reforming reaction; and/or
the hydrocarbon fuel having the high self-ignitability includes a fuel, obtained when separating a hydrocarbon fuel supplied externally, by a separator membrane.

12. An engine as claimed in claim 11, wherein the reforming reaction that produces the hydrocarbon fuel having the low self-ignitability comprises:
a utilization of exhaust heat from the internal combustion engine; and/or cyclodehydrogenation.

13. A combustion method for an internal combustion engine, comprising:
forming a premixed mixture of fuel and air in a combustion chamber;
forming a fuel gas layer in a predetermined area of the combustion chamber, substantially extending from one end of a cylinder bore to the other end as viewed in a cylinder-bore direction defined by a centerline of the cylinder bore and including an igniter, near a top dead center on a compression stroke; and
igniting the fuel gas layer.

14. A vehicle having an engine as claimed in any of claims 1 to 12.
